# EUROPEAN PATENT APPLICATION

(11) **EP 2 302 910 A1**
(43) Date of publication of application: **30.03.2011**
(21) Application number: 10168473.6
(22) Date of filing: 05.07.2010
(51) Int. Cl.: H04N 5/445

(54) **Electronic apparatus and display method**

(30) Priority: 24.09.2009 JP 2009218564
(71) Applicant: Kabushiki Kaisha Toshiba, Tokyo 105-8001 (JP)
(72) Inventor: Kuwahara, Kazuki, Tokyo Aichi (JP)
(74) Representative: Henkel, Feiler & Hänzel

(57) **Abstract**

An electronic apparatus includes: a broadcasting receiver configured to receive a video signal of a channel to be recorded on a storage medium; a video controller configured to record the video signal of the channel received by the broadcasting receiver on the storage medium and play back the recorded video signal; and an indicator generator that generates an indicator image that indicates a playback position when the recorded video signal of the channel is played back, wherein the indicator image includes: a first indicator configured to indicate the recording time of a plurality of recorded programs in time series; a second indicator configured to indicate a playback position so as to be associated with the first indicator; and a third indicator configured to indicate a program change position between a plurality of recorded programs included in the channel.

## Description

### CROSS-REFERENCE TO THE RELATED APPLICATION(S)

The present application is based upon and claims priority from prior Japanese Patent Application No. 2009-218564, filed on September 24, 2009, the entire contents of which are incorporated herein by reference.

### BACKGROUND

### 1. Field

The present invention relates to an electronic apparatus and a display method.

### 2. Description of the Related Art

In recent years, a so-called PVR (Personal Video Recorder) has been proposed which records and reproduces program signals on or from a storage medium such as an HDD (Hard Disk Drive).

In the apparatus, when a recorded program is played back, a bar having the recording time of the recorded program as the horizontal axis is displayed, and a playback position mark is displayed at a position on the bar corresponding to the elapsed time during reproduction. In addition, the elapsed time from the head of the program during reproduction is displayed as a numerical value and the recording date of the program is also displayed. An example of such apparatus is disclosed in JP-A-2002-101374.

In recent years, with an increase in the storage capacity of the HDD, apparatuses have been developed which receive a plurality of broadcast waves that is simultaneously transmitted with a plurality of tuners and automatically record all the programs satisfying conditions, such as channels or time.

When the automatically recorded programs are played back, it is possible to know a playback position of each program using the above-mentioned technique, but it is difficult to display the playback position in the plurality of recorded programs.

### SUMMARY

One of objects of the present invention is to provide an electronic apparatus and a display method capable of displaying a playback position in a recorded program such that a user can easily know the playback position in the recorded program during the reproduction of the recorded program.

According to one aspect of the present invention, there is provided an electronic apparatus including: a broadcasting receiver configured to receive a video signal of a channel to be recorded on a storage medium; a video controller configured to record the video signal of the channel received by the broadcasting receiver on the storage medium and play back the recorded video signal; an indicator generator that generates an indicator image that indicates a playback position when the recorded video signal of the channel is played back; and a video processor configured to superimpose a program video generated from the video signal of the channel recorded by the video controller on the indicator generated by the indicator generator and outputs the superimposed data, wherein the indicator image includes: a first indicator configured to indicate the recording time of a plurality of recorded programs in time series; a second indicator configured to indicate a playback position so as to be associated with the first indicator; and a third indicator configured to indicate a program change position between a plurality of recorded programs included in the channel.

According to another aspect of the present invention, there is provided a display method including: receiving video signals of a plurality of channels to be recorded on a storage medium; simultaneously recording the received video signals of the plurality of channels; and displaying a first indicator that indicates the recording time of the plurality of recorded programs in time series, a second indicator that indicates a playback position so as to be associated with the first indicator, and a third indicator that indicates a program change position between a plurality of programs included in the recorded channel, when the recorded video signals of the channels are played back.

### BRIEF DESCRIPTION OF THE DRAWINGS

A general configuration that implements the various features of the present invention will be described with reference to the drawings. The drawings and the associated descriptions are provided to illustrate embodiments of the invention and not to limit the scope of the invention.
Fig. 1 is a diagram illustrating the external appearance of a television broadcast receiver according to an embodiment of the invention.
Fig. 2 is a diagram illustrating the external appearance of a remote controller of the television broadcast receiver according to the embodiment.
Fig. 3 is a functional block diagram illustrating the television broadcast receiver according to the embodiment.
Fig. 4 is a conceptual diagram illustrating an example of the storage state of an HDD according to the embodiment.
Fig. 5 is a conceptual diagram illustrating the storage state of a time information table according to the embodiment.
Fig. 6 is a diagram illustrating an example of a previous program list according to the embodiment.
Fig. 7 is a diagram illustrating an example of an indicator while reproduction is performed by a second playback method according to the embodiment.
Fig. 8 is a diagram illustrating an example of the indicator while reproduction is performed by the second playback method according to the embodiment.
Fig. 9 is a diagram illustrating an example of the indicator while reproduction is performed by a first playback method according to the embodiment.
Fig. 10 is a diagram illustrating an example of the indicator while reproduction is performed by the second playback method according to the embodiment.
Fig. 11 is a diagram illustrating an example of the indicator while reproduction is performed by the second playback method according to the embodiment.
Fig. 12 is a flowchart illustrating the process of an indicator generator according to the embodiment.

### DETAILED DESCRIPTION

An embodiment according to the present invention will be described in detail with reference to the accompanying drawings. The scope of the claimed invention should not be limited to the examples illustrated in the drawings and those described below.

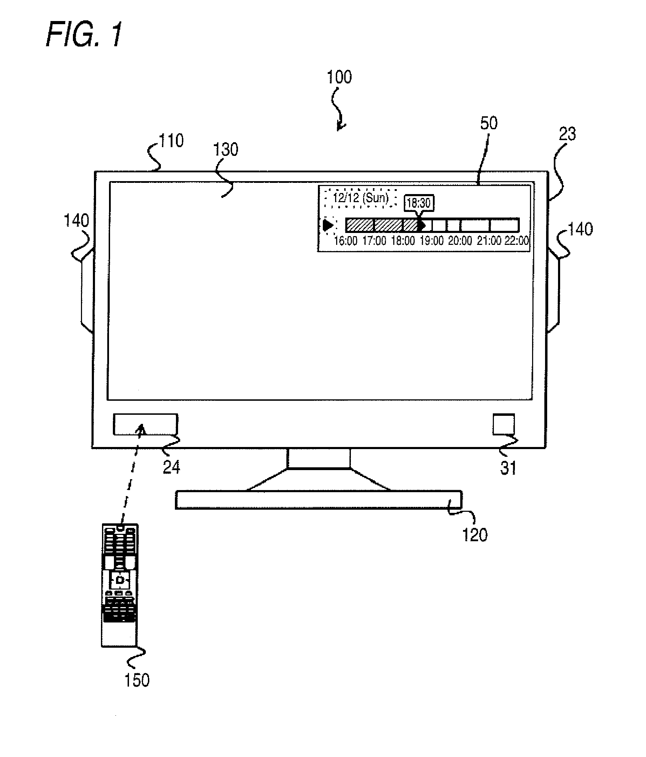

A television broadcast receiver 100 will be described as an example of an electronic apparatus according to the invention. Fig. 1 is a diagram illustrating an external appearance of the television broadcast receiver 100 according to an embodiment of the present invention.

In this embodiment, the television broadcast receiver is given as an example of the electronic apparatus, however, the present invention is not limited thereto. That is, the invention can be applied to any apparatuses including a broadcast receiver, such as a mobile phone with a broadcasting receiving function, a personal computer with a broadcasting receiving function, and a video recording apparatus provided with a broadcast receiver. In addition, broadcasting is not limited to the reception of radio waves propagated through air, but a broadcasting system capable of receiving programs distributed from a broadcasting station through a network, such as a cable or IP (Internet Protocol) network, may be used.

The television broadcast receiver 100 mainly includes a thin case 110 and a supporting table 120 that supports the case 110. The case 110 includes an electronic device, such as a tuner 3. An image display device 130 is provided at the center of the front face of the case 110, and speakers 140 are provided on both sides of the case 110 to perform stereophonic sound reproduction. The image display device 130 is, for example, an SED (Surface-conduction Electron-emitter Display) display panel or an LCD (Liquid Crystal Display) panel.

A receiver 24 that receives operation signals wirelessly transmitted from a remote controller 150 is provided at a lower portion of the front face of the case 110. An user interface 23, such as a power switch, is provided on the side surface of the case 110 of the television broadcast receiver 100. The television broadcast receiver 100 is supplied with power from the outside through a plug (not shown), receives various kinds of broadcast waves through an antenna 1, which will be described below, decodes the received broadcast signal with a signal processor 12, and outputs video signals and audio signals. The image display device 130 processes the decoded video signals to display an image, and the speaker 140 processes the decoded audio signals and outputs a sound.

In this embodiment, an electronic device, such as a tuner, is provided in the case 110. An electronic device, such as the tuner 3, may be provided in a case that is separate from the case 110, the housing may be connected to the television broadcast receiver 100, and the image display device 130 and the speakers 140 of the television broadcast receiver 100 may output video and audio signals.

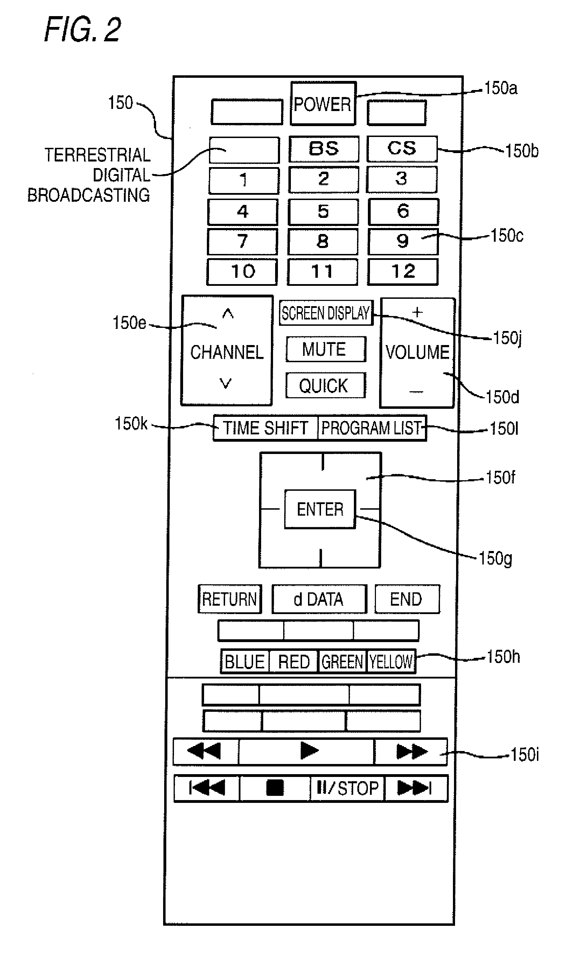

Fig. 2 is a diagram illustrating the external appearance of the remote controller 150 of the television broadcast receiver according to this embodiment. Next, the structure of the remote controller 150 of the television broadcast receiver 100 will be described with reference to Fig. 2.

The remote controller 150 includes a power key 150a, a broadcasting switching key 150b, direct channel selecting keys 150c, a volume adjusting key 150d, a channel up/down key 150e, a cursor key 150f, an enter key 150g, blue, red, green, and yellow keys 150h, a special playback key 150i, a screen display key 150j, a time shift key 150k, and a program list key 1501.

The power key 150a is for inputting instructions to turn on or off the television broadcast receiver 100. The broadcasting switching key 150b is for inputting instructions to switch broadcasting displayed by the television broadcast receiver 100 among terrestrial digital broadcasting, BS digital broadcasting, and CS digital broadcasting. The direct channel selecting keys 150c are for instructing the television broadcast receiver 100 to display channels corresponding to the keys. The volume adjusting key 150d is for inputting an instruction to change the volume of the sound output from the speakers 140.

The channel up/down key 150e is for inputting an instruction to change the channel displayed by the television broadcast receiver 100 in the order of channel numbers. The cursor key 150f is for inputting an instruction to move a cursor displayed on the image display device 130. The enter key 150g is for inputting an instruction to select an item at the position indicated by the cursor key 150f.

The color keys 150h are for inputting instructions to perform operations corresponding to operation conditions that are allocated to each color key displayed on the screen. The special playback key 150i is for inputting instructions to perform special playback, such as fast-forward, rewind, stop, playback, the skipping of the next program, and the skipping of a previous program. The screen display key 150j is for displaying indicator 50.

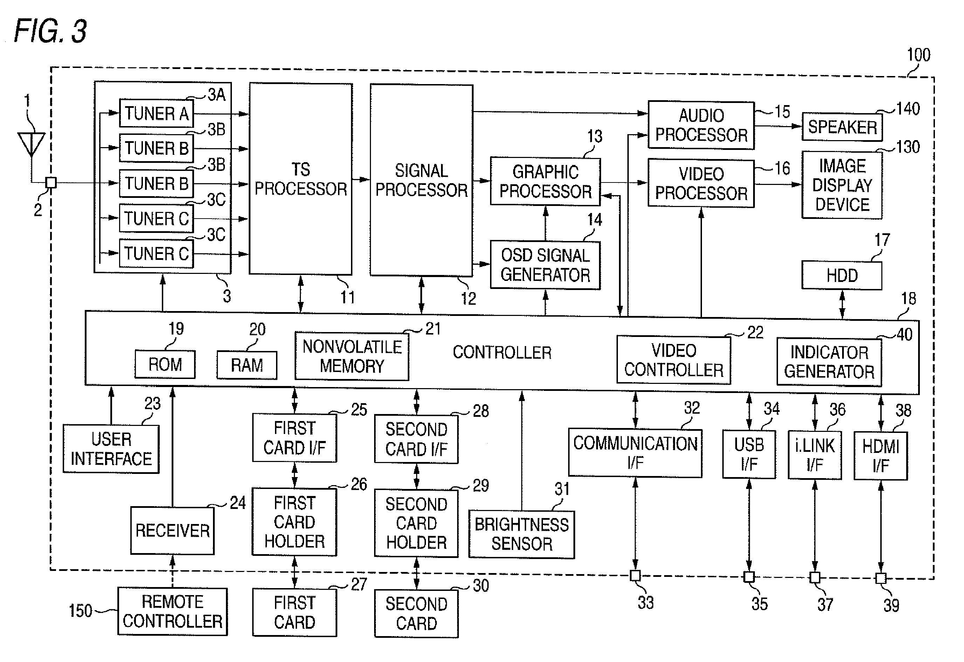

The time shift key 150k is for displaying a previous program list 44 including the programs simultaneously recorded by a second recording method. The program list key 1501 is for displaying the current broadcasting program list based on EPG (Electronic Program Guide) information. When each of the keys is operated, an operation signal indicating the content of the instruction is input to a controller 18 shown in Fig. 3 through the receiver 24.

Fig. 3 is a functional block diagram illustrating the television broadcast receiver 100 according to this embodiment. Next, the function of the television broadcast receiver 100 performing the indicator 50 according to this embodiment will be described with reference to Fig. 3.

The television broadcast receiver 100 includes the antenna 1, an input terminal 2, the tuner 3, a TS (Transport Stream) processor 11, a signal processor 12, a graphic processor 13, an OSD (On Screen Display) signal generator 14, an audio processor 15, a video processor 16, an HDD (Hard Disk Drive) 17, the controller 18, the user interface 23, the receiver 24, a first card I/F (Interface) 25, a first card holder 26, a second card I/F 28, a second card holder 29, a brightness sensor 31, a communication I/F 32, a LAN terminal 33, a USB I/F 34, a USB terminal 35, an i.LINK I/F 36, an i.LINK terminal 37, an HDMI I/F 38, an HDMI terminal 39, the image display device 130, and the speakers 140.

The controller 18 includes a ROM (Read Only Memory) 19, a RAM (Random Access Memory) 20, a nonvolatile memory 21, a video controller 22, an indicator generator 40, and a CPU (Central processing unit).

The antenna 1 is capable of receiving broadcast signals, such as terrestrial digital broadcast signals, BS digital broadcast signals, and CS digital broadcast signals. The broadcast signals received from the antenna 1 are input to a plurality of tuners 3 through the input terminal 2. The tuner 3 selects a broadcasting signal of a desired channel from three kinds of broadcast signals, that is, the terrestrial digital broadcast signals, the BS digital broadcast signals, and the CS digital broadcast signals, in response to a control signal from the controller 18, demodulates the selected broadcasting signal (in the case of the terrestrial digital broadcasting, OFDM (Orthogonal Frequency Division Multiplexing) demodulation, and in the case of the BS digital broadcasting and the CS digital broadcasting, PSK (Phase Shift Keying) demodulation) to obtain a TS (Transport Stream) including a desired program, and inputs the TS to the processor 11.

The plurality of tuners 3 is denoted by reference numerals 3A, 3B, and 3C according to the received broadcast waves. When it is not necessary to particularly discriminate the tuners, the tuners are simply referred to as a tuner 3. In the specification, the tuner 3A is for reproducing a television program, and the tuners 3B and 3C are for recording. The difference between recording methods using the broadcasting signals selected by the tuners 3B and 3C will be described below.

When a plurality of TSs of the selected channel is input from the tuner 3, the TS processor 11 multiplexes the plurality of TSs into one TS again and outputs the multiplexed TS to the signal processor 12.

In addition, during a recording operation, when a plurality of TSs selected by the tuners 3B and 3C is input from the tuner 3, the TS processor 11 multiplexes the plurality of TSs into one TS again and outputs the multiplexed TS to the signal processor 12.

The signal processor 12 performs appropriate digital signal processing on the multiplexed TS of a plurality of channels output from the TS processor 11. The TS subjected to the digital signal processing is separated into a data signal, a video signal, and an audio signal. The separated video signal is output to the graphic processor 13, the separated audio signal is output to the audio processor 15, and the separated data signal is output to the OSD signal generator 14 or the controller 18. The TS multiplexed by the TS processor I 1 for recording is output to the controller 18.

The data signals include various kinds of information related to the broadcasting program. An example of the information related to the broadcasting program is time information. In the Japanese terrestrial digital broadcasting system, examples of a program arrangement information table defined by ARIB STD-B10. which is an Association Radio Industries and Business (ARIB) standard, includes a time and date table (TDT) and a time offset table (TOT) including offset time information during daylight saving time, and Japanese Standard Time (JST = Universal Time coordinated (UTC)+9) and the current date and time by Modified Julian Date (MJD) are transmitted by these tables.

In the specification, it is assumed that the time offset table (TOT) is used as the current date and the current time. In ARIB TR-B14, which is operational guidelines for Japanese terrestrial digital broadcasting, a default period for which the time offset table (TOT) is transmitted is set to 5 seconds, and the TOT is transmitted at an interval of 5 seconds.

In addition, the information related to the program included in the data signal includes EPG information. In this embodiment, the EPG information is used to generate a program list of the current broadcasting programs and a previous program list 44 of the recorded programs.

The graphic processor 13 decodes a digital video signal output from the signal processor 12. The decoded video signal is superimposed and combined with an OSD signal output from the OSD signal generator 14 and the combined signal is output to the video processor 16. The graphic processor 13 may selectively output the decoded video signal or the OSD signal to the video processor 16.

The OSD signal generator 14 generates the OSD signal for displaying, for example, a UI (user interface) screen under the control of the controller 18. The OSD signal generator 14 converts the data signal separated from the digital broadcasting signal by the signal processor 12 into an OSD signal with an appropriate format and outputs the converted signal to the graphic processor 13.

The OSD signal generator 14 receives a data signal for displaying the indicator 50 from the indicator generator 40, which will be described below, and outputs the data signal to the graphic processor 13.

The audio processor 15 converts the audio signal input from the signal processor 12 into an analog audio signal with a format that can be reproduced by the speakers 140. The converted analog audio signal is output to the speakers 140 and is then reproduced.

The video processor 16 converts the signal output from the graphic processor 13 into an analog video signal with a format that can be displayed by the image display device 130. The converted analog video signal is output to the image display device 130.

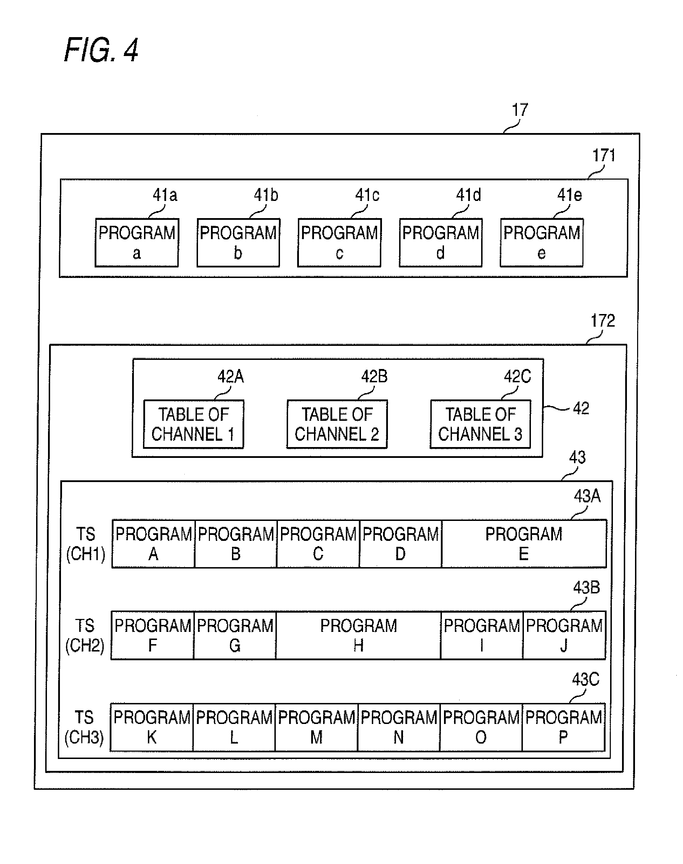

The HDD 17 stores the TS for each channel under the control of the video controller 22. The storage state of the HDD 17 will be described below with reference to Fig. 4.

The controller 18 starts a system control program and various kinds of programs that have been stored in the ROM 19 in response to an operation signal input from the user interface 23 or an operation signal that is transmitted from the remote controller 150 and is then received by the receiver 24. The controller 18 controls the operation of each unit of the apparatus using the RAM 20 as a work memory, according to the started program.

The ROM 19 is a memory for storing the system control program and various processing programs executed by the CPU.

The RAM 20 is a so-called working memory used for the CPU to expand various programs.

The nonvolatile memory 21 stores, for example, various kinds of settling information and control information required to control the operation of each unit.

The video controller 22 controls a recording function and a function of playing back the recorded program of the television broadcast receiver 100. That is, the video controller 22 demultiplexes the multiplexed TS of a plurality of channels output from the signal processor 12 for each channel, and stores the demultiplexed data in the HDD 17.

In addition, the video controller 22 controls the reproduction of recorded data, reads the TS for each channel stored in the HDD 17, reproduces the read TS, and controls the image display device 130 to display the TS or control the speakers 140 to output a sound. The LAN terminal 33 is provided as a port only for a LAN-compatible HDD. Therefore, it is possible to stably record information of a program with a high-definition image quality on the HDD 17, without being affected by other network environments or network conditions.

In this embodiment, the television broadcast receiver 100 includes two kinds of recording methods. First, in the first recording method, the programs are individually designated or the user arbitrarily designates recording start and end times. That is, in the first recording method, one broadcast wave broadcasting the designated program is received and stored in the HDD 17. This method is the same as that used in the HDD recorder according to the related art in which the programs to be recorded are individually designated. In this embodiment, it is assumed that the tuner 3B receives the broadcast wave used in the first recording method.

In the second recording method, the programs are not individually designated, but conditions, such as a channel, time, and date, are designated and all the programs satisfying the conditions are recorded. That is, a plurality of broadcast waves satisfying the conditions is received and stored for each channel in parallel to each other in the HDD 17. It is assumed that the tuner 3C receives the broadcast waves used in the second recording method.

When recording is performed by the second recording method, EPG image signals of the programs recorded during the same period are acquired from the data signal separated by the signal processor 12, and the previous program list 44 is stored in the HDD 17 based on the acquired EPG image signals. The time shift key 150k is pushed to read the previous program list 44 from the HDD 17 and display it.

Fig. 4 is a conceptual diagram illustrating an example of the storage state of the HDD 17 according to this embodiment. The storage state of the programs recorded by the two recording methods will be described with reference to Fig. 4.

The video controller 22 divides the HDD 17 into a first storage region 171 and a second storage region 172 and stores data in the divided regions. The TS of the program recorded by the first recording method is stored in the first storage region 171, and a time information table 42 created for each channel and a TS 43 for each channel recorded by the second recording method are stored in the second storage region 172.

The TSs of programs "a" to "e" that are individually designated and recorded by the user are stored in the first storage region 171. The TS of each of the programs "a" to "e" includes program information, such as channel information of each program or a program name.

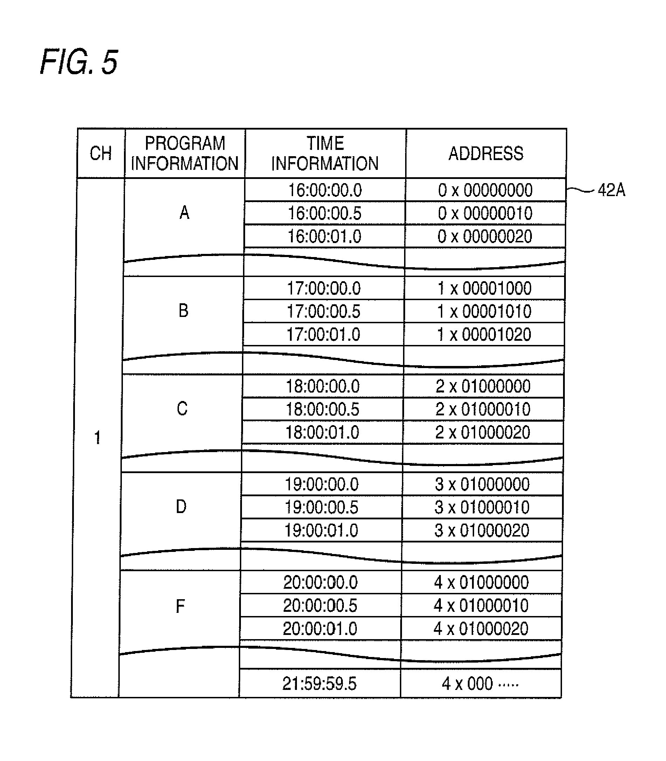

Fig. 5 is a conceptual diagram illustrating the storage state of the time information table 42 according to this embodiment. Time information tables 42A to 42C correspond to channels 1 to 3, respectively. Channel information, program information, time information, and an address are recorded on each time information table 42 so as to be associated with each other. For example, the time information table 42 is created at an interval of 0.5 second, similar to a GOP (Group of Picture) interval of an MPEG (Moving Picture Experts Group)-2 broadcasting system. In addition, the address is a logical address or a physical address.

In addition, programs A to P recorded by designating the conditions, such as time and date, at the channels 1 to 3 are stored as the TS 43 for each channel in the second storage region 172. When the storage capacity of the second storage region 172 reaches a limit, recording is continuously performed while the previously recorded programs are sequentially removed in chronological order. The time information table 42 of the previously recorded programs is also sequentially removed in chronological order, and a time information table of newly recorded programs is created and stored.

The storage position of the time information table 42 is not limited to the second storage region 172. That is, the time information table 42 may be stored in the nonvolatile memory 21 or a storage medium connected through various interfaces.

In this embodiment, the television broadcast receiver 100 includes two kinds of playback methods of reproducing the recorded programs.

First, in the first playback method, one program is selected from the programs stored in the first storage region 171 and is then played back. That is, in the first playback method, a list of the programs "a" to "e" stored in the first storage region 171 is displayed, one program to be played back is selected from the programs, and the selected program is played back.

In the second playback method, the TSs of a plurality of channels stored in the second storage region 172 are continuously reproduced in the order of the recording time while changing the channels. That is, when the channels are changed while any one of the TSs 43a to 43c of the channels 1 to 3 stored in the second storage region 172 is being reproduced, the channel to be changed is reproduced from the second storage region 172 and is then displayed from substantially the same time as that of the channel which is being reproduced. Therefore, it is possible to change the channels to reproduce the program such that the user watches the previous broadcasting programs in real time.

The phrase "substantially the same time" used herein means 10 seconds before and after the recording time of the playback position. It takes several seconds from the start of the reproduction of the TS 43 to the display of an image on the image display device 130. Therefore, when the playback position is moved to the position where programs are recorded at the same time, the image recorded with a time delay of several seconds from the recording time is displayed. The playback position may be moved to a position that is several seconds before the recording position, as compared to the time information of the TS 43 that is reproduced at the time when the channel changing operation is performed. When the playback position is moved to the position of the TS 43 that is several seconds before the recording position, the image that has been recorded at the same time as the recording time of the channel reproduced before the channel changing operation is actually displayed.

The playback position may be moved to a position that is several seconds after the recording position, as compared to the time information of the TS 43 that is reproduced at the time when the channel changing operation is performed. When the playback position is moved to the position of the TS 43 that is several seconds after the recording position, it is possible to reenact the previous channel changing operation when the user watched the broadcasting programs in real time.

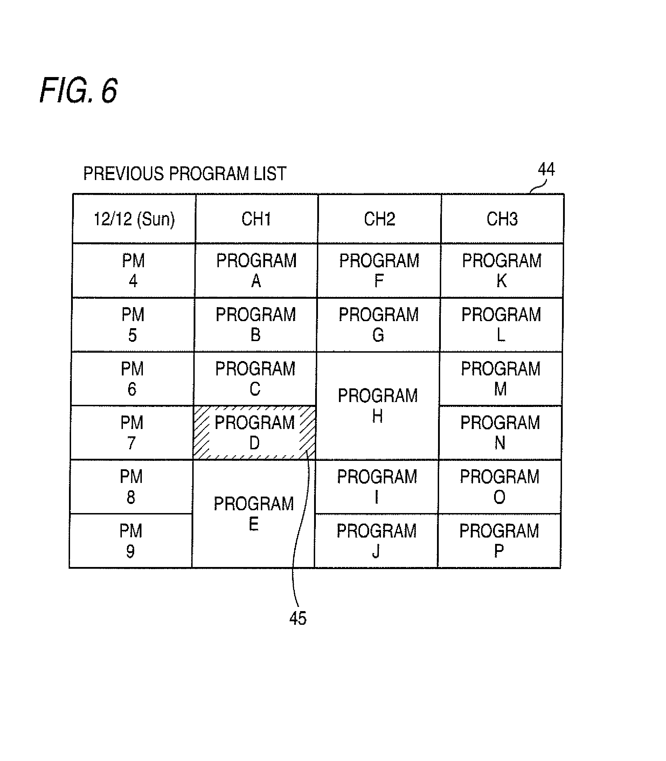

Fig. 6 is a diagram illustrating an example of the previous program list 44 according to this embodiment. As shown in Fig. 6, the previous program list 44 includes the programs simultaneously recorded for each channel in time series. When the user uses the cursor key 150f to move the cursor 45 in the previous program list 44 and pushes the enter key 150g with the cursor 45 placed on a program, the video controller 22 reproduces the program indicated by the cursor 45. In the example shown in Fig. 6, when the user pushes the enter key 150g with the cursor 45 placed on a program D, the video controller 22 plays back the program D and then plays back a program E immediately after the program D is completely played back.

The user interface 23 receives an operation signal corresponding to the operation of the user and inputs the signal to the controller 18.

The receiver 24 receives an operation signal corresponding to the operation of the remote controller 150 by the user and inputs the signal to the controller 18.

The first card holder 26 is connected to the controller 18 through the first card I/F 25. The first card 27 can be inserted into the first card I/F 25. The first card 27 is a storage medium, such as an SD (Secure Digital) memory card, an MMC (Multimedia Card), or a CF (Compact Flash) (registered trademark) card. The first card 27 inserted into the first card holder 26 and the controller 18 can transmit information through the first card I/F 25. The controller 18 can store data, such as images, music, and broadcasting programs, in the first card 27. In addition, the controller 18 can read data, such as images, music, and broadcasting programs, stored in the first card 27, and control the audio processor 15 and the video processor 16 to decode the read data, control the image display device 130 to display the read data, or control the speakers 140 to output a sound.

The second card holder 29 is connected to the controller 18 through the second card I/F 28. The second card 30 can be inserted into the second card I/F 28. The second card 30 is a storage medium that stores, for example, the contract information of broadcasting subscription. The second card 30 inserted into the second card holder 29 and the controller 18 can transmit information through the second card I/F 28.

The brightness sensor 31 is provided on the front face of the case 110, detects brightness around the television broadcast receiver 100, and inputs the detection result to the controller 18. The controller 18 controls the brightness of the image display device 130 based on the input detection result related to the brightness.

The LAN (Local Area Network) terminal 33 is connected to the controller 18 through the communication I/F 32. The LAN terminal 33 is used as a port only for a LAN-compatible HDD using the Ethernet (registered trademark). When a LAN-compatible HDD is connected as a NAS (Network Attached Storage) to the LAN terminal 33, the HDD 17 and the controller 18 can transmit information through the communication I/F 32. In this case, the controller 18 serves as a DHCP (Dynamic Host Configuration Protocol) server, allocates an IP (Internet Protocol) address to the LAN-compatible HDD connected to the LAN terminal 33, and controls the LAN-compatible HDD.

A storage medium, such as a hard disk or a DVD (optical disc), can be provided in an apparatus, such as an HDD, a PC, or a DVD recorder, connected to the controller 18 through the communication I/F 32. The controller 18 can store data, such as images, music, and broadcasting programs in the storage medium through a hub and an apparatus connected to the hub. In addition, the controller 18 can read and reproduce data, such as images, music, and broadcasting programs, stored in the storage medium, and control the image display device 130 to display the data, or control the speakers 140 to output a sound.

The USB (Universal Serial Bus) terminal 35 is connected to the controller 18 through the USB I/F 34. The USB terminal 35 is used as a port corresponding to a general USB. For example, a mobile phone, a digital camera, a card reader/writer corresponding to various kinds of memory cards, an HDD, and a keyboard are connected to the USB terminal 35 through the hub. The controller 18 can transmit information to an apparatus connected thereto through the USB terminal 35 and the USB I/F 34.

The i.LINK terminal 37 is connected to the controller 18 through the i.LINK I/F 36. For example, an AV-HDD and a D (Digital)-VHS (Video Home System) are connected in series to the i.LINK terminal 37. The controller 18 can transmit information to an apparatus connected thereto through the i.LINK terminal 37 and the i.LINK I/F 36.

The HDMI terminal 39 is connected to the controller 18 through the HDMI I/F 38. For example, a personal computer, a liquid crystal display, or an AV amplifier is connected to the HDMI terminal 39. The controller 18 can transmit an apparatus connected thereto through the HDMI terminal 39 and the HDMI I/F 38.

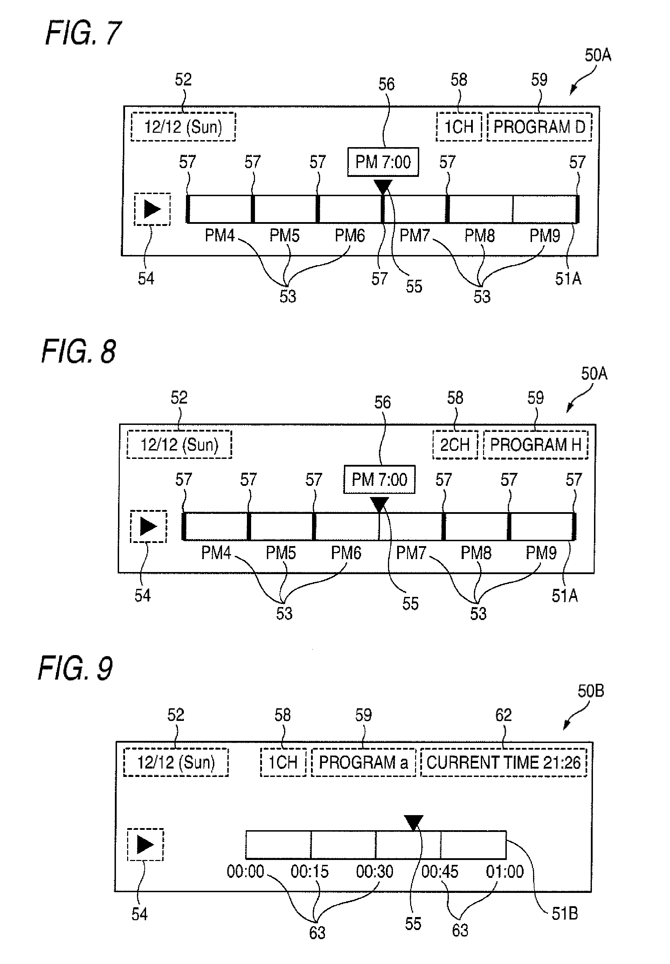

The indicator generator 40 generates the indicator 50 shown in Figs. 7 to 11 in response to instructions from the user. The instructions to generate the indicator 50 include an instruction to start recording with the second playback method, an instruction that is input through the direct channel selecting key 150c to change the channel while the channel is reproduced by the second playback method, and an instruction that is input through the screen display key 150j. When receiving the generation instructions, the indicator generator 40 acquires the time information table 42 of the channel that is being played back or starts to be played back from the second storage region 172.

Then, the indicator generator 40 generates a signal for displaying the indicator 50 based on the acquired time information table 42 and transmits the signal to the OSD signal generator 14. The OSD signal generator 14 generates an OSD signal based on the received signal for displaying the indicator 50 and outputs the OSD signal to the graphic processor 13. The graphic processor 13 superimposes and combines the OSD signal for displaying the indicator 50 with the video signal of the program that is instructed to be played back, and outputs the combined signal to the video processor 16. The video processor 16 performs conversion based on the signal received from the graphic processor 13 and the indicator 50 and the image of the played back program are displayed on the image display device 130.

Next, the indicator 50 will be described with reference to Figs. 7 to 11. Figs. 7 to 11 are diagrams illustrating an example of the indicator 50 while reproduction is performed by the second playback method according to this embodiment. The indicator 50 is displayed when reproduction starts to be performed by the second playback method, when the channel is changed by the direct channel selecting key 150c while reproduction is performed by the second playback method, or when the screen display key 150j is pushed while reproduction is performed by the second playback method.

In the following description, the indicator 50 displayed while reproduction is performed by the first playback method is referred to as an indicator 50A, and the indicator 50 displayed while reproduction is performed by the second playback method is referred to as an indicator 50B. In addition, the slider bar 51 displayed in the indicator 50A is referred to as a slider bar 51A, and the slider bar 51 displayed in the indicator 50B is referred to as a slider bar 51 B.

Fig. 7 is a diagram illustrating an example of the indicator while reproduction is performed by the second playback method according to this embodiment. The indicator 50 includes a slider bar 51A, a date display 52, a recording time display 53, an operation display 54, a playback position pointer 55, a playback position time display 56, a program change point 57, a channel display 58, and a program name 59.

A first display according to the invention corresponds to the slider bar 51 A, a second display according to the invention corresponds to the playback position pointer 55 or the playback position time display 56, a third display according to the invention corresponds to the program change point 57, a fourth display according to the invention corresponds to a recording discontinuous point 61, a fifth display according to the invention corresponds to a non-recorded portion 60, a sixth display according to the invention corresponds to the recording time display 53, a seventh display according to the invention corresponds to date displays 52A and 52B, and an eighth display according to the invention corresponds to the channel display 58 and the program name 59.

The slider bar 51A indicates the recording time of the program stored in the second storage region 172 in a bar-shaped region having graduations as time intervals, for the channel selected from the previous program list 44. The slider bar 51 A indicates a total of six recording hours that are three hours before and after the selected reproduce start time. The length of the slider bar 51A is constant for the time and the slider bar 51A is graduated in one hour.

The date display 52 indicates the date at which the program is recorded. The date display 52 is generated by acquiring date information from a clock that is provided in the apparatus. Fig. 7 shows a program recorded on December 12 (Sunday).

The recording time display 53 indicates the recording time corresponding to the graduations of the slider bar 51A. Fig. 7 shows the recording time at an interval of one hour from 4 p.m. to 10 p.m. In the recording time display 53, the hours may have different colors. It is possible to facilitate the user's understanding of the reproduction time of the recorded program by changing the color of the recording time display 53.

The operation display 54 indicates the operation state of the television broadcast receiver 100. The operation state means the state of a reproducing operation, such as fast-forward, rewind, stop, reproduction, time-shift playback, the skip of the next program, and the skip of the previous program. The special playback key 150i of the remote controller 150 is pushed to operate the television broadcast receiver 100. Fig. 7 shows the program that is being played back.

The playback position pointer 55 indicates a position corresponding to the recording time of the video signal that is currently being played back. The time information of the address of the TS 43 that is being played back is acquired from the time information table 42, and the playback position pointer 55 is displayed at a corresponding position of the slider bar 51 based on the acquired time information.

The playback position time display 56 indicates the recording time of the video signal that is currently being played back. As shown in Fig. 7, the playback position time display 56 is displayed above the playback position pointer 55 so as to be operatively associated with the playback position pointer 55. The time information of the address of the TS 43 that is being played back is acquired from the time information table 42, and the playback position time display 56 is displayed based on the acquired time information. Fig. 7 shows the reproduction of the program recorded at 7 p.m.

In this embodiment, the position of the playback position display 55 and the position of the playback position time display 56 are determined based on the time information table 42, but the invention is not limited thereto. For example, the positions may be determined based on the TOT of the TS 43.

The program change point 57 indicates a point at which the program is changed at the channel that is being recorded. In Fig. 7, the program is changed at 4 p.m, 5 p.m, 6 p.m, 7 p.m, 8 p.m, and 10 p.m.

The channel display 58 indicates the channel played back by the second playback method. The channel display 58 is changed by pushing the direct channel selecting key 150c to change the channel to be played back.

The program name 59 indicates the name of the program that is being played back. The program name 59 is generated from the EPG information included in the program information in the time information table 42 or the SI (System Information) information in the TS 43. Similar to the channel display 58, the program name 59 is changed by pushing the direct channel selecting key 150c to change the channel and the program to be played back.

Next, the indicator 50 when the direct channel selecting key 150c and the channel up/down key 150e are pushed to change the channel during the reproduction of the program by the second playback method will be described.

Fig. 8 is a diagram illustrating an example of the indicator 50A while reproduction is performed by the second playback method according to this embodiment. For example, when an instruction to change the channel to channel 2 at the reproduction start time of the program D of the channel 1 that has been recorded from 7 p.m. as shown in Fig. 7, the indicator 50A is changed as shown in Fig. 8. As can be seen from the comparison between Fig. 7 and Fig. 8, the playback position pointer 55 and the playback position time display 56 are not changed, but the channel display 58 and the program name 59 are changed. That is, when the channel is changed during reproduction by the second playback method, the TS 43 of the channel to be changed, which is recorded substantially at the same time, is read and played back with reference to the time information table 42. In the example shown in Fig. 7, the channel is changed at 7 p.m. and a program H of channel 2 is recorded at 7 p.m. in the previous program list 44 shown in Fig. 6. Therefore, the program is changed to the program H and the program H is played back.

Fig. 9 is a diagram illustrating an example of the indicator 50B while reproduction is performed by the first playback method according to this embodiment. The difference between the indicator 50B while reproduction is performed by the first playback method and the indicator 50A while reproduction is performed by the second playback method will be described with reference to Fig. 9. In Fig. 9, the same components as those in Fig. 7 are denoted by the same reference numerals and a detailed description thereof will be omitted.

As shown in Fig. 9, the indicator 50B while reproduction is performed by the first playback method includes a slider bar 51B, a date display 52, an elapsed time display 63, an operation display 54, a playback position pointer 55, a channel display 58, a program name 59, and a current time display 62.

In the first playback method that selects a program to be played back from the recorded program list and reproduces the selected program, the slider bar 51B indicates the recording time of a designated program. That is, in the first playback method, when the reproduction of the designated program ends, the reproducing operation ends, unlike the second playback method that reproduces the recorded programs from the program selected from the previous program list 44 in the order of the recording time.

Therefore, during reproduction by the first playback method, the elapsed time display 63 is displayed so as to correspond to the slider bar 51B. The elapsed time display 63 indicates the reproduction time elapsed from 0:00, which is the recording start time of the program instructed to be played back.

The current time display 62 is generated by acquiring date information from the timer that is provided in the apparatus. The elapsed time display 63 is generated based on the time information included in the time information table 42.

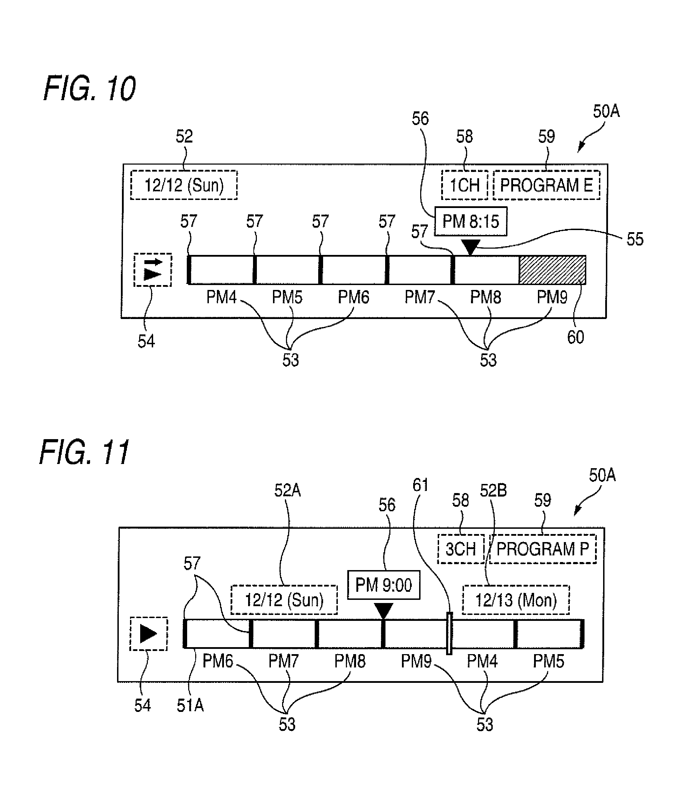

Fig. 10 is a diagram illustrating the indicator 50 during time-shift playback according to this embodiment. The time-shift playback is to reproduce a completely recorded portion of the program that is being recorded during a recording operation. The operation display 54 shown in Fig. 10 indicates the time-shift playback.

During the time-shift playback, a non-recorded portion 60 is displayed in the slider bar 51. The non-recorded portion 60 means a portion of the program that is programmed to be recorded, but is not recorded since broadcasting is not performed. In Fig. 10, changing playback is performed on a program E that will be broadcasted from 8 p.m. to 10 p.m. That is, in Fig. 10, the current time is 9 p.m., program recording is programmed up to 10 p.m., and a completely recorded portion of the program corresponding to 8:15 p.m. is played back.

Fig. 11 is a diagram illustrating an example of the indicator while reproduction is performed by the second playback method according to this embodiment. Fig. 11 shows the indicator 50 when a program P of channel 3 is designated in the previous program list 44 shown in Fig. 6. In this embodiment, it is assumed that the broadcasting programs of the channel 3 are programmed to be recorded from 4 p.m. to 8 p.m. every day.

As described above, the slider bar 51A indicates the program recorded for a total of six hours that are three hours before and after the reproduction start time. Therefore, since the program of channel 3 is programmed to be recorded up to 10 p.m. on December 12, the program that is programmed to be recorded at the next day is displayed in the slider bar 51A. In this case, the recording discontinuous point 61 is provided in the slider bar 51 A to display a date change point. The display of the recording discontinuous point 61 enables the user to easily understand the structure of a plurality of programs recorded by the second recording method. The date at which each program is recorded may be displayed by the date displays 52A and 52B that are disposed at positions corresponding to the programs. Fig. 11 shows the recording of the program on December 12 and December 13.

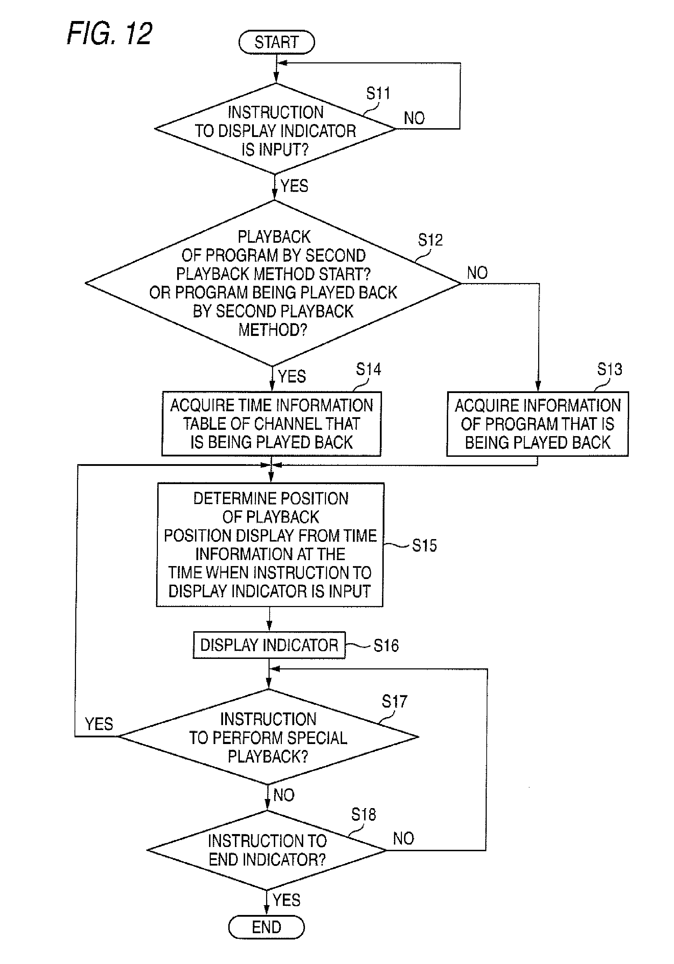

Fig. 12 is a flowchart illustrating the process of the indicator generator 40 according to this embodiment. Next, the procedure of a process of displaying the indicator 50 will be described with reference to Fig. 12.

First, the indicator generator 40 determines whether an instruction to display the indicator 50 is received from the remote controller 150 (Step S11). The instruction to display the indicator 50 includes, for example, an instruction to start the reproduction of the program using one of the first and second playback methods and an instruction input from the screen display key 150j during reproduction.

If it is determined in Step S11 that the instruction to display the indicator 50 is not received (Step S11: No), the process returns to Step S11. On the other hand, if it is determined that the instruction to display the indicator 50 is received (Step S11: Yes), the indicator generator 40 determines whether the instruction to display the indicator 50 is received after the reproduction of the program by the second playback method starts or during the reproduction of the program (Step S12). That is, the indicator generator 40 determined whether the reproduction of the recorded program selected from the previous program list 44 starts or whether the screen display key 150j is pushed while the recorded program selected from the previous program list 44 is being played back.

If it is determined in Step S12 that the instruction is not received after the reproduction of the program by the second playback method starts or during the reproduction of the program (Step S12: No), that is, if it is determined that the program starts to be played back by the first playback method or it is being played back, the indicator generator 40 acquires the program information of the program that is being played back from the first storage region 171 (Step S13). That is, the indicator generator 40 acquires the program information that is stored together with the TS, which is being played back, acquired from the first storage region 171. The indicator generator 40 generates a video signal indicating the indicator 50 shown in Fig. 9 based on the acquired program information.

On the other hand, if it is determined that the instruction is received after the reproduction of the program by the second playback method starts or during the reproduction of the program (Step S12: Yes), the indicator generator 40 acquires the time information table 42 of the channel that starts to be played back or is being played back from the second storage region 172 (Step S14). The indicator generator 40 generates a video signal indicating the slider bar 51A, the recording time display 53, or the program change point 57 shown in Fig. 7 based on the time information table 42.

Then, the indicator generator 40 determines the playback position pointer 55 and the playback position time display 56 from time information at the time when the instruction to display the indicator 50 is input (Step S15). That is, the indicator generator 40 acquires corresponding time information with reference to the address of the TS, which is being played back at the time when the instruction to display the indicator 50 is received, in the time information table 42. The indicator generator 40 determines the position of the playback position pointer 55 or the playback position time display 56 in the slider bar 51 based on the time information.

Then, the indicator generator 40 superimposes the display determined in Step S14 on the display based on the information acquired in Steps S13 and S14 to generates the indicator 50 (Step S16). Then, the display of the playback position pointer 55 and the playback position time display 56 and the display of the elapsed time during reproduction are changed.

The indicator generator 40 determines whether an instruction to perform special playback is input from the special playback key 150i (Step S17). If it is determined in Step S17 that the instruction to perform special playback is input (Step S17: Yes), the process returns to Step S15. That is, the indicator generator 40 acquires time information again at a new reproduction start point corresponding to the instruction to perform special playback.

For example, when an instruction to skip the next program is input as the instruction to perform special playback, the video signal and the audio signal are moved to the head of the next program. The playback position pointer 55 in the slider bar 51 is moved from the playback position pointer 55 where the special playback is instructed to the closest program change point 57 in the direction in which the time scale have advanced.

Then, the indicator generator 40 determines whether an instruction to end the indicator 50 is received (Step S18). The instruction to end the indicator 50 is an instruction to end the reproduction of the recorded program by the second playback method or an instruction that is input when the screen display key 150j is pushed during reproduction. If it is determined in Step S18 that the instruction to end the indicator 50 is not received (Step S18: No), the process returns to Step S17. On the other hand, if it is determined that the instruction to end the indicator 50 is received (Step S18: Yes), the display process ends.

In this embodiment, the indicator 50 is displayed until the instruction to end the indicator 50 is received, but the invention is not limited thereto. For example, the indicator 50 may automatically end after a predetermined time has elapsed after the start of reproduction.

According to this embodiment having the above-mentioned structure, since the indicator 50 is displayed, the user can easily know a playback position in a plurality of programs recorded at the same time when watching the programs. That is, when the playback position pointer 55 is displayed in the slider bar 51 having the recording time of a plurality of programs as a total length in the indicator 50, the user can intuitively recognize the playback position in the program that is being recorded. In addition, even when the channel is changed to another channel that is simultaneously recorded, the playback position in the channel to be changed is also displayed. Therefore, it is possible for the user to easily check the playback position.

In addition, since the program change point 57 is displayed in the slider bar 51, it is easy for the user to understand the structure of a plurality of recorded programs. When the recording time or data is discontinuous, the recording discontinuous point 61 is displayed. Therefore, it is possible to display the recording time of the recorded program such that the user can easily understand it. In addition, since the recording time display 53 is displayed in a color corresponding to the recording time, it is possible to display the recorded program such that the user can easily recognize the broadcasting time of the recorded program.

In this embodiment, the time information table 42 in which the address, which is the storage position of the TS, is associated with the time information is created, but the invention is not limited thereto. That is, the time of each playback position may be calculated from the time information included in the TS 43.

The invention is not limited to the above-described embodiment, but various modifications and changes of the invention can be made without departing from the scope and spirit of the invention. In addition, a plurality of components according to the above-described embodiment may be combined with each other to form various structures. For example, some of the components according to above-described embodiment may be removed. Components according to another embodiment may be appropriately combined with the components according to the above-described embodiment.

Although the embodiment according to the present invention has been described above, the present invention is not limited to the above-mentioned embodiments but can be variously modified. Constituent components disclosed in the aforementioned embodiment may be combined suitably to form various modifications. For example, some of all constituent components disclosed in the embodiment may be removed, replaced, or may be appropriately combined with other components.

Additional advantages and modifications will readily occur to those skilled in the art. Therefore, the invention in its broader aspects is not limited to the specific details and representative embodiments shown and described herein. Accordingly, various modifications may be made without departing from the spirit or scope of the general inventive concept as defined by the appended claims and their equivalents.

## Claims

1. An electronic apparatus comprising:
a broadcasting receiver configured to receive a video signal of a channel to be recorded on a storage medium;
a video controller configured to record the video signal of the channel received by the broadcasting receiver on the storage medium and play back the recorded video signal;
an indicator generator that generates an indicator image that indicates a playback position when the recorded video signal of the channel is played back; and
a video processor configured to superimpose a program video generated from the video signal of the channel recorded by the video controller on the indicator generated by the indicator generator and outputs the superimposed data,
wherein the indicator image comprises:
a first indicator configured to indicate the recording time of a plurality of recorded programs in time series;
a second indicator configured to indicate a playback position so as to be associated with the first indicator; and
a third indicator configured to indicate a program change position between a plurality of recorded programs included in the channel.

2. The apparatus of Claim 1,
wherein the indicator image further comprises a fourth indicator configured to indicate a discontinuous position at which time information of the plurality of recorded programs included in the channel is discontinuous.

3. The apparatus of Claim 1 or 2,
wherein the indicator image further comprises a fifth indicator configured to be displayed on the first indicator for discriminating the time length of a program to be recorded from the recorded portion, when the video controller plays back a video signal of the recorded portion of the program while recording the video signal of the program.

4. The apparatus of any one of Claims 1 to 3,
wherein the indicator image further comprises a sixth indicator configured to display the recording times of the program in different colors.

5. The apparatus of any one of Claims 1 to 4,
wherein the first indicator shows a program that is recorded within a predetermined period of time from a playback start position.

6. The apparatus of any one of Claims 1 to 5,
wherein the indicator image further comprises a seventh indicator configured to indicate different recording dates, when the time information of a plurality of recorded programs included in the channel is discontinuous and the programs are recorded on different dates.

7. The apparatus of any one of Claims 1 to 6,
wherein the indicator image further comprises an eighth indicator configured to indicate the name of the program that is being played back and a channel name.

8. The apparatus of any one of Claims 1 to 7 further comprising:
a display device configured to display the signal output from the video processor.

9. A display method comprising:
receiving video signals of a plurality of channels to be recorded on a storage medium;
simultaneously recording the received video signals of the plurality of channels; and
displaying a first indicator that indicates the recording time of the plurality of recorded programs in time series, a second indicator that indicates a playback position so as to be associated with the first indicator, and a third indicator that indicates a program change position between a plurality of programs included in the recorded channel, when the recorded video signals of the channels are played back.
